# EUROPÄISCHE PATENTANMELDUNG

(11) **EP 1 103 393 A2**
(43) Veröffentlichungstag der Anmeldung: **30.05.2001**
(21) Anmeldenummer: 00125766.6
(22) Anmeldetag: 24.11.2000
(51) Int. Cl.: B60G 3/00, B62D 17/00

(54) **Stützradanordnung**

(30) Priorität: 25.11.1999 DE 19956785
(71) Anmelder: Dekra Automobil GmbH, 70565 Stuttgart (DE)
(72) Erfinder: Berg, F. Alexander, 71277 Rutesheim (DE); Bühren, Wolfgang, 32791 Lage (DE); Ewert, Wolfhard, 24783 Osterrönfeld (DE); Stenau, Matthias, 33818 Leopoldshöhe (DE)
(74) Vertreter: Patentanwalts-Partnerschaft Rotermund + Pfusch

(57) **Zusammenfassung**

Die Stützradanordnung dient zur Erhöhung der Kippsicherheit eines nicht spurgebundenen Lastwagens bei schneller Kreis- bzw. Kurvenfahrt im Rahmen von Fahrversuchen und besteht im wesentlichen aus einer mit Längsträgern (2) des Rahmens des Lastwagens verbindbaren Traverse (4) und an deren Enden anbringbaren, hydraulisch höhenverstellbaren Stützrädern (3).

## Beschreibung

Die Erfindung betrifft eine Stützradanordnung zur Erhöhung der Kippsicherheit eines nicht spurgebundenen Lastwagens bei schneller Kreis- bzw. Kurvenfahrt im Rahmen von Fahrversuchen.

Die Sicherheit von Fahrzeugen sollte nicht nur aufgrund theoretischer Berechnungen sondern auch durch Fahrversuche ermittelt werden. Die Sicherheit von Lastwagen hängt in hohem Maße von der Sicherheit der Fahrzeugaufbauten ab, beispielsweise davon, in welcher Weise der jeweilige Aufbau mit dem Chassis bzw. Fahrwerksrahmen des Lastwagens verbunden ist. Des weiteren kann auch die Gewichtsverteilung der Ladung sowie die Lage des Schwerpunktes der Ladung einen großen Einfluß auf die Fahrsicherheit haben.

Im Rahmen von Sicherheitsüberprüfungen werden mit Lastwagen Kreis- und Kurvenfahrten mit hoher Querbeschleunigung durchgeführt. Dabei kann es erwünscht sein, die Kippgrenze des Fahrzeuges zu erreichen oder sogar zu überschreiten, um das Fahrverhalten in Grenzbereichen zu ermitteln bzw. zu testen.

Allerdings soll aus Kostengründen regelmäßig vermieden werden, daß das Fahrzeug bei derartigen Sicherheitstests tatsächlich kippt und damit zumindest erheblich beschädigt wird.

Aus diesem Grunde wurde schon vorgeschlagen, Lastwagen bei Durchführung der vorgenannten Fahrversuche mit an seitlichen Auslegern angeordneten Stützrädern zu versehen. Durch diese Stützräder wird die wirksame Spurweite des Fahrwerks wesentlich vergrößert, so daß im Ergebnis bei den Versuchsfahrten extreme Querbeschleunigungen erreicht werden können, ohne daß das Fahrzeug kippen kann. Auf diese Weise kann die Belastbarkeit eines Fahrzeugaufbaus auch bei extremen Fahrsituationen ohne Beschädigung des Fahrzeuges getestet werden.

Aus der DE 35 00 904 A1 ist eine Vorrichtung zur Beeinflussung der Fahrtrichtungshaltung von Kraftfahrzeugen bekannt. Dabei wird das Fahrzeug an der Position eines Fahrzeugrades durch zumindest eine Rolle abgestützt, welche so angeordnet ist, daß unter Einwirkung der Bodenreibung eine nahezu unverzögerte Ausrichtung der mindestens einen Rolle in Richtung der am Fahrzeug angreifenden Kräfte gewährleistet ist und dementsprechend keine Seitenführungs- bzw. Spurführungskräfte erzeugt werden können. Mit derartigen Anordnungen lassen sich bei einem Sicherheitstraining für Kraftfahrzeugfahrer gefährliche Fahrsituationen simulieren, wie z.B. extremes Glatteis oder das Platzen eines Reifens.

Aus der DE-AS 28 23 106 ist eine Meßvorrichtung für den Lenkrollradius eines gelenkten Rades eines Fahrzeuges bekannt. Diese Meßvorrichtung umfaßt ein Meßrad, dessen Drehachse mit dem Achsschenkel des zu vermessenden lenkbaren Fahrzeugrades schwenkfest verbunden ist. Aus dem Schwenkwinkel des Fahrzeugrades sowie dem vom Meßrad bei Schwenkung des Fahrzeugrades zurückgelegten Weg läßt sich der Lenkrollradius ermitteln.

Aufgabe der Erfindung ist es nun, für Fahrversuche mit schneller Kreis- bzw. Kurvenfahrt eine besonders zweckmäßige Stützradanordnung zu schaffen, welche sich an sehr unterschiedlichen Lastwagen montieren läßt.

Diese Aufgabe wird erfindungsgemäß gelöst durch eine Stützradanordnung mit verbreiterter Abstützung des Rahmens des Lastwagens durch eine mit Längsträgern des Rahmens verbindbare Traverse sowie an deren Enden anbringbare, hydraulisch höhenverstellbare Stützräder.

Die Erfindung beruht auf dem allgemeinen Gedanken, lediglich die Abstützung des Fahrzeugrahmens durch eine damit fest verbindbare Traverse zur Anordnung der Stützräder zu verbreitern, so daß die Verbindung zwischen Rahmen und Fahrzeugaufbau sowie die Lastabtragung des Fahrzeugaufbaus auf den Rahmen völlig unverändert bleiben. Durch die hydraulisch höhenverstellbaren Stützräder können einerseits unterschiedliche Bodenabstände der Fahrzeugrahmen ausgeglichen und andererseits bei entsprechender Steuerung bzw. Regelung der Höheneinstellung der Stützräder die maximal erreichbaren Wankwinkel des Fahrzeuges bei Kreis- bzw. Kurvenfahrt reproduzierbar vorgegeben werden. Des weiteren ist vorteilhaft, daß die bei der vertikalen Abstützung der Abstützräder auftretenden hydraulischen Drücke ein Maß für die jeweiligen Querkräfte darstellen. Die zur Höheneinstellung der Abstützräder dienenden Hydraulikaggregate können also eine Doppelfunktion erfüllen, indem sie einerseits zur Höheneinstellung der Abstützräder und andererseits durch Kombination mit Druckmeßelementen auch zur Erfassung der jeweils auf das Fahrzeug einwirkenden Querkräfte dienen können.

Gemäß einer bevorzugten Ausführungsform der Erfindung sind die Stützräder jeweils über ein Pendelachsaggregat an der Traverse angelenkt. Damit kann auch bei großen Querkräften bzw. bei der Höhenverstellung der Stützräder nur wenig Reibung auftreten. Darüber hinaus ist vorteilhaft, daß die Spurweite der Stützradanordnung durch die Achsaggregate vergrößert wird und die Traverse auch bei extremer Spurweite der Stützräder vergleichsweise kurz sein kann, so daß die Stützradanordnung durch Trennung der Achsaggregate von der Traverse ohne größeren Demontageaufwand in leicht handhabbare Teile zerlegt werden kann.

Das Pendelachsaggregat kann im wesentlichen aus einem an der Traverse gelagerten bzw. lagerbaren Achsträger und einer daran befestigten Hälfte einer nicht antreibbaren Vorderachse eines marktgängigen Lastkraftwagens bestehen. Auf diese Weise werden, zur unmittelbaren Radführung der Stützräder, auf dem Markt als Ersatzteile erhältliche Standardteile eingesetzt und der Bedarf an Sonderteilen stark verringert.

Die zur vorgenannten Vorderachse gehörigen längenveränderlichen Spurstangen können mit ihren radfernen Enden am Achsträger angelenkt sein, so daß durch Längeneinstellung der Spurstangen ein gewünschtes Maß der Vorspur der Stützräder einstellbar ist.

Grundsätzlich ist es auch möglich und vorteilhaft, die radfernen Enden der Spurstangen mit Steueraggregaten, z.B. hydraulischen Stellaggregaten, zu verbinden, so daß sich die Stützräder gegebenenfalls auch variabel lenken lassen.

Bei der Durchführung der Fahrversuche wird die hydraulische Höhenverstellung der Stützräder vorzugsweise kraft- und/oder neigungsabhängig gesteuert bzw. geregelt, so daß das Fahrzeug einerseits realitätsnahe Wankbewegungen ausführen kann und andererseits gegen Umkippen und damit verbundener Beschädigung gesichert wird.

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform näher beschrieben wird.

Dabei zeigt,
- Fig. 1: eine schematisierte Frontansicht - Blickrichtung in Fahrzeuglängsrichtung - des Stützradaggregates und
- Fig. 2: eine entsprechende Draufsicht.

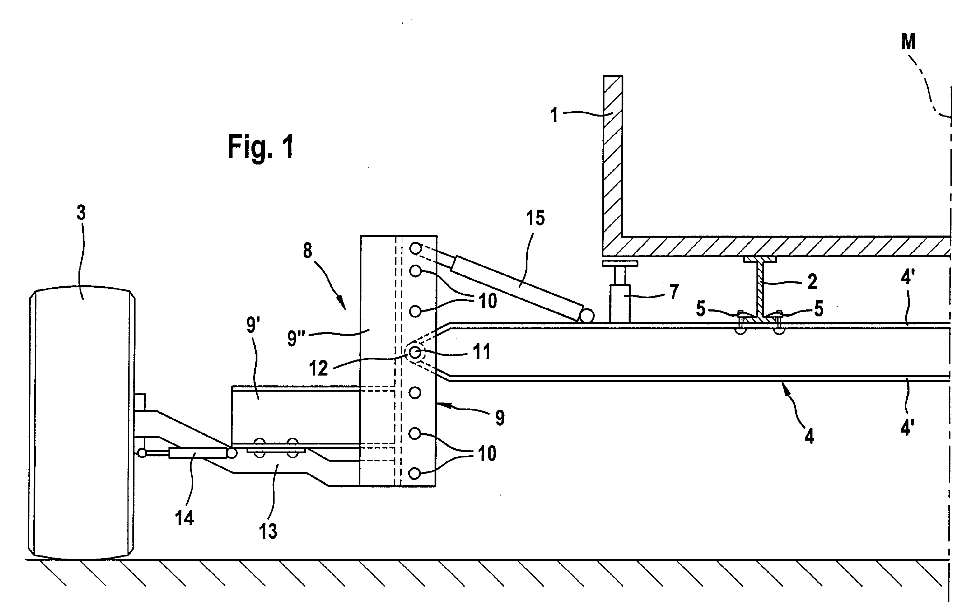

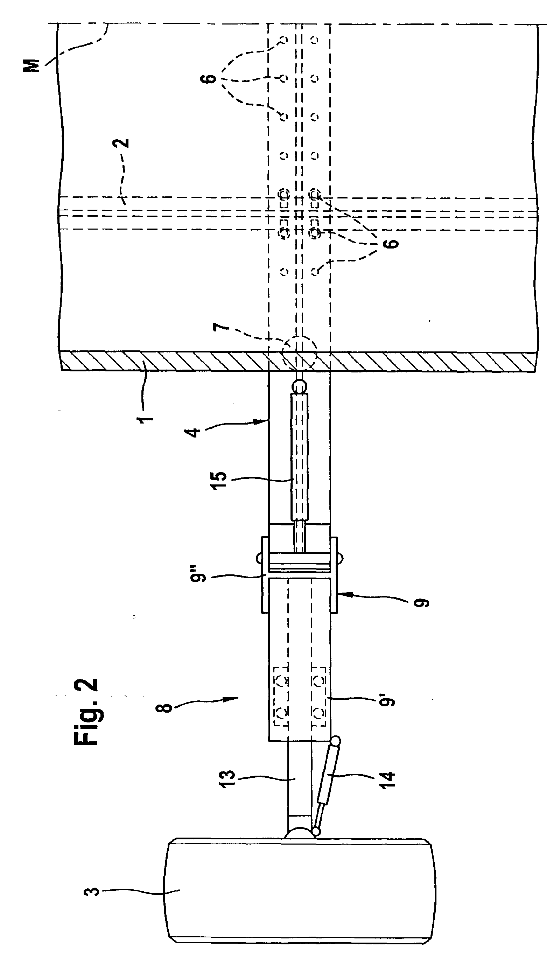

In den Fig. 1 und 2 ist von einem zu einer vertikalen Mittellängsebene M im wesentlichen symmetrischen Lastfahrzeug lediglich ein Fahrzeugaufbau 1, im dargestellten Beispiel eine Pritsche, sowie ein Längsträger 2 eines im übrigen nicht näher dargestellten Fahrzeugrahmens abgebildet, auf dem der Fahrzeugaufbau 1 in bekannter nicht näher dargestellter Weise befestigt ist.

Um beidseitig des Fahrzeuges Stützräder 3 anordnen zu können, wird unter den Längsträgern 2 eine Traverse 4 angeordnet. Die Traverse 4 besitzt im dargestellten Beispiel ein Doppel-T-Profil (oder H-Profil), wobei die Ober- sowie die Unterseiten der Traverse 4 jeweils durch ein flanschartiges Band 4' gebildet werden. An den freien Enden der Traverse 4 sind die Bänder 4' unter Verjüngung der Traverse 4 abgewinkelt, derart, daß ein keilförmiger Verbund gebildet wird, wie aus Fig. 1 ersichtlich ist.

Zur Befestigung der Traverse 4 dienen Klemmelemente 5, mit denen neben einer kraftschlüssigen Verbindung auch eine zumindest in Fahrzeugquerrichtung formschlüssige Verbindung zwischen der Traverse 4 und den Längsträgern 2 ermöglicht wird. Die Klemmelemente 5 sind bei der zeichnerisch dargestellten Ausführungsform am oberen Band 4' der Traverse 4 angeordnet und wirken mit dem unteren Band der Längsträger 2 des Fahrzeugrahmens zusammen. Diese Längsträger 2 haben typischerweise ebenfalls ein Doppel-T-Profil. Um die Traverse 4 an unterschiedlich breiten Fahrzeugrahmen ohne weiteres anbringen zu können, sind im oberen Band 4' der Traverse 4 zur Befestigung der Klemmelemente 5 Lochreihen 6 angeordnet, vgl. Fig. 2.

Auf der Oberseite der Traverse 4 sind vorzugsweise verstellbare Aufsatzstützen 7 angeordnet oder anbringbar, über die sich der Aufbau 1 auch auf der Traverse 4 abzustützen vermag. In der Regel werden die Aufsatzstützen 7 so eingestellt, daß zwischen Aufbau 1 und Aufsatzstütze 7 ein gewisser Abstand verbleibt, welcher erst bei hoher Belastung des Aufbaus 1 bzw. des Lastwagens oder bei Fahrversuchen mit hohen Querkräften aufgezehrt wird.

An den freien Enden der Traverse 4 sind Pendelachsaggregate 8 mit den Stützrädern 3 angeordnet. Diese Pendelachsaggregate 8 besitzen einen Achsträger 9, welcher im wesentlichen aus zwei rechtwinklig miteinander verbundenen Doppel-T-Profilen 9' und 9" besteht. Dabei erstreckt sich das eine Doppel-T-Profil 9' in etwa horizontaler Richtung, das andere Doppel-T-Profil 9" ist im wesentlichen vertikal angeordnet, wobei seine flanschartigen Bänder das zugewandte Ende der Traverse 4 auf deren Vorder- und Rückseite umgreifen und mit vertikal übereinander angeordneten Bolzenaugen 10 versehen sind. In diese Bolzenaugen 10 läßt sich ein Lagerbolzen 11 einsetzen, welcher zur scharnierartig gelenkigen Verbindung von Achsträger 9 und Traverse 4 dient und dazu einerseits eine am freien Ende der Traverse 4 angeordnete Lagerbuchse 12 sowie zwei dazu gleichachsige Bolzenaugen 10 durchsetzt. Je nach Bodenabstand der Traverse 4 wird der Lagerbolzen 11 in weiter oben oder weiter unten am Doppel-T-Profil 9" angeordnete Bolzenaugen 10 eingesetzt, derart, daß das Doppel-T-Profil 9' eine etwa horizontale Lage einnimmt, wenn das Stützrad 3 montiert ist und ein im wesentlichen belastungsfreier Zustand der Traverse 4 und des Stützrades 3 vorliegt.

Die Führung des Stützrades 3 übernimmt eine Halbachse 13. Dabei handelt es sich um die eine Hälfte einer nicht angetriebenen Vorderachse eines marktgängigen Lastkraftwagens. Die andere Hälfte dieser Vorderachse dient zur Führung des in der Zeichnung nicht dargestellten anderen Stützrades 3. An der Halbachse 13 ist das Stützrad 3 an sich lenkbar angeordnet. Jedoch ist eine zur Halbachse 13 gehörige längeneinstellbare Spurstange 14 mit ihrem radfernen Ende am Doppel-T-Profil 9' des Achsträgers 19 befestigt, so daß das Stützrad 3 unlenkbar, aber mit durch Längenänderung der Spurstange 14 einstellbarer Vorspur gehaltert wird.

Abweichend von der dargestellten Ausführungsform kann das radferne Ende der Spurstange 14 auch mit einem beispielsweise hydraulischen Stellaggregat verbunden sein, so daß sich das Stützrad 3 durch Betätigung des Stellaggregates lenken läßt.

Der Achsträger 9 ist über ein hydraulisches Kolben-Zylinder-Aggregat 15, welches vorzugsweise doppeltwirkend ausgebildet ist, an der Traverse 4 abgestützt. Bei der in der Zeichnung dargestellten Anordnung des Kolben-Zylinder-Aggregates 15 oberhalb der Traverse 4 wird das Aggregat 15 durch die Radaufstandskräfte am Stützrad 3 auf Druck belastet. Grundsätzlich ist auch eine Anordnung des Aggregates 15 unterhalb der Traverse 4 möglich und vorteilhaft, wobei das achsträgerseitige Ende des Aggregates 15 am unteren Ende des Doppel-T-Profiles 9" angelenkt wird. In diesem Falle wird das Aggregat 15 durch die Radaufstandskräfte auf Zug belastet.

Die dargestellte Stützradanordnung kann eine Spurweite in der Größenordnung von 5 m aufweisen, so daß bei Fahrversuchen mit dem jeweiligen Fahrzeug extreme Querbeschleunigungen errreichbar sind, die ohne die Stützradanordnung dazu führen würden, daß das Fahrzeug umkippte.

Durch eine von den am Fahrzeug wirkenden Querkräften und/oder von dem Wankwinkel des Fahrzeuges abhängige Steuerung bzw. Regelung des Hydraulikdruckes in den Kolben-Zylinder-Aggregaten 15 können bei den Fahrversuchen Fahrzustände erreicht werden, die für das jeweilige Fahrzeug ohne Stützradanordnung gefährlich sind oder zwangsläufig zu einem Unfall führen würden.

## Patentansprüche

1. Stützradanordnung zur Erhöhung der Kippsicherheit eines nicht spurgebundenen Lastwagens (1,2) bei schneller Kreis-bzw. Kurvenfahrt im Rahmen von Fahrversuchen, mit verbreiterter Abstützung des Rahmens des Lastwagens (1,2) durch eine mit Längsträgern (2) des Rahmens verbindbare Traverse (4) sowie an deren Enden anbringbare, hydraulisch höhenverstellbare Stützräder (3).

2. Stützradanordnung nach Anspruch 1,
**dadurch gekennzeichnet,**
daß die Stützräder (3) über ein Pendelachsaggregat (8) an der Traverse (4) angelenkt sind.

3. Stützradanordnung nach Anspruch 1 oder 2,
**dadurch gekennzeichnet,**
daß das Pendelachsaggregat (8) einen Achsträger (9) mit mehreren, in etwa vertikaler Reihe übereinander angeordneten Verbindungselementen (10) zur gelenkigen Ankopplung an die Traverse (4) aufweist.

4. Stützradanordnung nach Anspruch 2 oder 3,
**dadurch gekennzeichnet,**
daß das Pendelachsaggregat (8) im wesentlichen aus einem pendelbar an der Traverse (4) gelagerten bzw. lagerbaren Achsträger (9) und einer daran befestigten Hälfte (13) einer nicht antreibbaren Vorderachse eines Lastkraftwagens besteht.

5. Stützradanordnung nach Anspruch 4,
**dadurch gekennzeichnet,**
daß eine längenveränderliche Spurstange (14) der Achshälfte (13) am Achsträger (9) angelenkt und zur Einstellung einer Vorspur des Stützrades (3) nutzbar ist.

6. Stützradanordnung nach Anspruch 4 oder 5,
**dadurch gekennzeichnet,**
daß das Stützrad (3) lenkbar angeordnet ist.

7. Stützradanordnung nach einem der Ansprüche 1 bis 6,
**gekennzeichnet**
durch eine kraft- bzw. neigungsabhängige Steuerung bzw. Regelung der hydraulischen Höhenverstellung (15) der Stützräder.

8. Stützradanordnung nach einem der Ansprüche 1 bis 7,
**dadurch gekennzeichnet,**
daß der hydraulische Druck für die Höhenverstellung der Stützräder (3) mit Meßelementen erfaßbar und mittels rechnergesteuerte Auswertevorrichtung in ein Maß für auf das Fahrzeug wirkende Wankkräfte auswertbar ist.
